# EUROPÄISCHE PATENTSCHRIFT

(11) **EP 1 654 482 B1**
(45) Veröffentlichungstag und Bekanntmachung des Hinweises auf die Patenterteilung: **14.03.2007**
(21) Anmeldenummer: 04741192.1
(22) Anmeldetag: 21.07.2004
(51) Int. Cl.: F16H 61/30

(54) **ELEKTRO-PNEUMATISCHE SCHALTEINHEIT**
ELECTRO-PNEUMATIC SWITCH UNIT
BOITE DE COMMUTATION ELECTRO-PNEUMATIQUE

(30) Priorität: 16.08.2003 DE 10337582
(43) Veröffentlichungstag der Anmeldung: 10.05.2006
(73) Patentinhaber: ZF FRIEDRICHSHAFEN Aktiengesellschaft, 88038 Friedrichshafen (DE)
(72) Erfinder: FISCHER, Dieter, 88149 Nonnenhorn (DE)
(86) Internationale Anmeldenummer: PCT/EP2004/008150
(87) Internationale Veröffentlichungsnummer: WO 2005/019704

(56) Entgegenhaltungen:
- DE-A- 10 029 497
- DE-A- 10 217 482
- DE-A- 19 839 854

## Beschreibung

Die vorliegende Erfindung betrifft eine elektro-pneumatische Schalteinheit für ein Kraftfahrzeuggetriebe, das ein manuell vom Fahrer an einem Handschalthebel schaltbares Hauptgetriebeteil, ein über Ventile pneumatisch schaltbares Splitgruppengetriebe und ein über Ventile pneumatisch schaltbares Bereichsgruppengetriebe aufweist, nach dem Oberbegriff des Anspruchs 1.

Getriebe von größeren Nutzfahrzeugen sind üblicherweise in einen Hauptgetriebeteil, ein Splitgruppengetriebe (GV) und ein Bereichsgruppengetriebe (GP) aufgeteilt. Moderne Getriebe vor allem in Nutzfahrzeugen weisen dabei eine durch eine Pneumatik unterstützte Schalteinrichtung auf, die pneumatische Schaltungen im Splitgruppengetriebe und im Bereichsgruppengetriebe durchführt, während die Schaltungen im Hauptgetriebeteil manuell vom Fahrzeugführer durchgeführt werden und dabei in der ausübenden Kraft durch die Pneumatik unterstützt werden können.

Zur Steuerung der modernen Kraftfahrzeuggetriebe werden in zunehmendem Maße elektronische Bauteile vorgesehen. Diese Bauteile dienen, neben anderen Zwecken, auch der Verhinderung von Schaltungen im Getriebe, die auf Grund sonstiger Bedingungen, wie insbesondere zu hoher Fahrzeuggeschwindigkeiten bezogen auf den zu schaltenden Gang, nicht zulässig sind.

Aus der DE 198 39 854 A1 ist eine Schaltvorrichtung bekanntgeworden, bei der eine Servounterstützungseinrichtung die Schaltkraft des Fahrers unterstützt. Dabei soll die Zufuhr der unterstützenden Druckluft reduziert werden und beispielsweise nur dann zugelassen werden, wenn die Fahrzeugkupplung betätigt wird. Dafür sind zusätzliche Ventile erforderlich, die die Reduzierung ermöglichen.

Eine elektro-pneumatische Schalteinheit mit Schutzmaßnahmen gegen unzulässige Schaltungen ist aus der gattungsbildenden DE 100 29 497 A1 bekannt. Diese elektro-pneumatische Schalteinheit für ein Fahrzeuggetriebe weist ein über Ventile pneumatisch schaltbares Splitgruppengetriebe und ein über Ventile pneumatisch schaltbares Bereichsgruppengetriebe auf, deren Schaltungen manuell vom Fahrzeugführer an einem Schalthebel vorwählbar sind, wobei es mit einer Sperreinrichtung zur mechanischen Unterbindung der manuellen Schaltung nicht zulässiger Übersetzungsverhältnisse versehen ist. Weiterhin ist eine Sperreinrichtung zur Unterbindung der pneumatischen Schaltung nicht zulässiger Übersetzungsverhältnisse des Fahrzeuggetriebes und eine elektronische Steuereinrichtung vorgesehen, wobei die Ventile des Splitgruppengetriebes und die Ventile des Bereichsgruppengetriebes elektromagnetisch betätigte Pneumatikventile sind, die in einem gemeinsamen Gehäuse angeordnet sind. Ihre Vorwahl erfolgt durch mit einer Steuereinrichtung verbundene elektrische Schalter am Handschalthebel, die durch Signale der elektronischen Steuereinrichtung betätigt werden.

Die erste Sperreinrichtung besteht in diesem Fall aus einem Gassensperrzylinder, der in der langsamen Übersetzungsstufe des Bereichsgruppengetriebes oberhalb einer bestimmten Abtriebsdrehzahl des Getriebes das Schalten von einer bestimmten Schaltgasse in eine andere bestimmte Schaltgasse verhindert, um den Fahrzeugführer davor zu bewahren, irrtümlich in eine unzulässige Übersetzungsstufe zu schalten, wenn er vergessen hat, die entsprechende Übersetzung im Bereichsgruppengetriebe vorzuwählen. Die zweite Sperreinrichtung ist eine Gruppensperre, die oberhalb einer vorgegebenen Fahrzeuggeschwindigkeit das Schalten des Bereichsgruppengetriebes in die langsame Übersetzung verhindert um dadurch sowohl die Synchronisierung des Bereichsgruppengetriebes als auch die Synchronisierungen des Hauptgetriebeteils zu schützen.

Die Aufhebung der Sperrwirkung der Einrichtung zur Unterbindung der pneumatischen Schaltung nicht zulässiger Übersetzungsverhältnisse des Fahrzeuggetriebes wird durch ein pneumatisches Ventil oder einen elektrischen Schalter am manuell betätigbaren Kupplungspedal bewirkt.

Schließlich beschreibt die DE 102 17 482 A1 eine elektro-pneumatische Schalteinheit, bei der ohne großen Zusatzaufwand die Zufuhr an unterstützender Druckluft bestimmt werden kann.

Eine derartige elektro-pneumatische Schalteinheit für ein Fahrzeuggetriebe umfasst ein manuell vom Fahrzeugführer an einem Schalthebel geschaltetes Hauptgetriebe, ein über Ventile elektro-pneumatisch geschaltetes Splitgruppengetriebe und ein Bereichsgruppengetriebe.

Die Schaltungen des Splitgruppengetriebes sind manuell vom Fahrzeugführer durch Schalter am Schalthebel vorwählbar. Ein Sensor oder Schalter erkennt eine manuelle Betätigung der Fahrzeugkupplung durch den Fahrzeugführer und gibt dieses Signal an eine elektronische Steuereinrichtung weiter, die dann die Ventile öffnet.

Des Weiteren ist ein Wechselventil vorgesehen, das mit je einer Eingangsöffnung mit einer Ausgangsleitung der Ventile verbunden ist. Die Ventile öffnen jedes Mal bei Vorliegen eines Kupplungsbetätigungssignals, wobei immer dasjenige der beiden Ventile öffnet, das bei der letzten Betätigung der Schalter für das Splitgruppengetriebe am Schalthebel vorgewählt worden ist. Eine Ausgangsöffnung des Wechselventils ist über eine Pneumatikleitung mit einer pneumatischen Servounterstützungseinrichtung verbunden, die den Fahrzeugführer bei der manuellen Schaltung im Hauptgetriebe unterstützt. Das Wechselventil lässt nur die Luftzufuhr von einem der beiden Ventile des Splitgruppengetriebes zu der Pneumatikleitung und damit zur Servounterstützungseinrichtung zu, während die andere Anschlussleitung durch das Wechselventil abgesperrt wird. Dadurch wird verhindert, dass der angeschlossene Schaltzylinder für das Splitgruppengetriebe eine Luftzufuhr für seine beiden Schaltrichtungen erhält. Nur die Anschlussleitung und damit nur der Teil des Schaltzylinders soll Luft bekommen, der auch vorgewählt wurde, wobei nicht wichtig ist, ob die Vorwahl aktuell neu vom Fahrzeugführer vorgenommen wurde, oder bei der letzten entsprechenden Betätigung der Schalter am Schalthebel erfolgt ist.

Für die Pneumatikleitung und damit für die Servounterstützungseinrichtung ist es gleichbedeutend, welcher der beiden Seiten des Schaltzylinders Luft bekommt. Die Servounterstützungseinrichtung soll immer dann Luft bekommen, wenn gekuppelt wird. Findet beim Schaltvorgang im Hauptgetriebe keine Schaltung im Splitgruppengetriebe statt, so wird bei der Betätigung der Kupplung das gleiche Ventil wieder angesteuert, das bereits bei der letzten Schaltung des Splitgruppengetriebes angesteuert und geschaltet worden ist. Dadurch lässt dieses Ventil Luft an das Wechselventil und damit an die Servounterstützungseinrichtung durch, ohne den Schaltzylinder des Splitgruppengetriebes selbst in seiner Position zu verändern.

Die Ventile übernehmen hierbei die zusätzliche Funktion, bei jeder Betätigung der Kupplung bzw, bei jedem Erreichen des Kupplungstrennpunktes Luft an das Wechselventil und damit an die Servounterstützungseinrichtung freizugeben, sodass nur im ausgekuppelten Zustand eine Zufuhr der die Handschaltkraft unterstützenden Servokraft zugelassen wird. Der Offenbarungsgehalt der DE 102 17 482 A1 soll vollinhaltlich auch Gegenstand dieser Beschreibung sein.

Zur ratschfreien Schaltung des Rückwärtsganges sind Synchronisierungen des Rückwärtsganges bzw. Synchronisierungen des Grundgetriebes bekannt, die jedoch zusätzliche Bauteile sind, die beim Schalten in den Rückwärtsgang betätigt werden.

Aufgabe der vorliegenden Erfindung ist es, eine elektro-pneumatische Schalteinheit für ein Getriebe eines Kraftfahrzeuges dahingehend auszugestalten, dass ein ratschfreies Einlegen des Rückwärtsganges ermöglicht wird.

Die Lösung dieser Aufgabe erfolgt mit den im Anspruch 1 angegebenen Merkmalen. Vorteilhafte Ausgestaltungen sind in den Unteransprüchen beschrieben.

Erfindungsgemäß ist also vorgesehen, dass das bereits für die Umschaltung des Splitgruppengetriebes vorhandene Magnetventil zusammen mit einem nachgeschalteten Wegeventil angesteuert wird, sobald mit dem Einlegen des Rückwärtsganges begonnen wird, d. h., sobald in die Gasse für den Rückwärtsgang geschaltet wird. Dabei wird der Druck zum Zylinder des Splitgruppengetriebes freigeschaltet, sodass dessen Kolben über die Schaltschiene die Schaltgabel gegen eine sich bereits in der Gangeinlegestellung befindliche Schiebemuffe der Synchronisierung des Splitgruppengetriebes drückt. Das dadurch erzeugte Bremsmoment verzögert den entsprechenden Radsatz des Splitgruppengetriebes über eine vorprogrammierte Bremszeit oder eine Drehzahlerkennung bis annähernd zum Stillstand ab, wodurch ratschfrei in den Rückwärtsgang geschaltet werden kann.

Diese Ausgestaltung der elektro-pneumatischen Schalteinheit bietet den Vorteil, dass keine zusätzlichen Bauteile für die Ausbildung einer eigens dafür vorzusehenden Bremse erforderlich sind, da die Magnetventile des Splitgruppengetriebes zur Ansteuerung mitverwendet werden und dadurch ein Ausgang an der elektronischen Steuereinrichtung eingespart werden kann.

Es ist ferner möglich, das erzeugte Bremsmoment bei vorhandener Gangerkennung zusätzlich zur Synchronisation bei Hochschaltungen einzusetzen. Die Abschaltung der Bremse wiederum bewirkt auch ein Abschalten der Servounterstützungseinrichtung und damit einen weiteren Schutz der Rückwärtsgang-Schaltungsteile.

Im Folgenden wird die Erfindung anhand der Zeichnung näher erläutert, in der ein vorteilhaftes Ausführungsbeispiel dargestellt ist.

In der einzigen Figur ist ein Schema einer Schalteinheit mit integrierter Getriebebremse zum ratschfreien Einlegen des Rückwärtsganges dargestellt.

Elektro-pneumatische Schalteinheiten der eingangs näher beschrieben Art sind dem Fachmann gut bekannt, sodass in der folgenden Beschreibung nur auf die für das Verständnis der Erfindung wesentlichen Bauteile und ihre Funktion eingegangen wird.

Mit 1 ist in dem Schaltschema ein Handschalthebel bezeichnet, für ein in üblicher Weise als "überlagertes H" bezeichnetes Schaltbild, der mit einem ersten Schalter zur Vorwahl der Schaltung des Splitgruppengetriebes und mit einem zweiten Schalter zur Schaltung des Bereichsgruppengetriebes versehen ist.

Mit 2 ist ein Wegsensor für die Kupplung bezeichnet, mit 3 eine Entriegelungseinrichtung, mit 4 eine Servounterstützungseinrichtung, mit 5 eine Schiebemuffe des Splitgruppengetriebes, mit 6 ein Zylinder des Splitgruppengetriebes, mit 7 ein Luftvorrat, mit 8 eine elektronische Steuereinrichtung, mit 9 eine Schaltwelle, mit 10 eine Gassensperre, die einen Gassensperrzylinder 13 aufweist, mit 11 ein Zylinder des Bereichsgruppengetriebes, mit 12 zwei Magnetventile des Splitgruppengetriebes, mit 14, 14' Ventile, mit 15 ein oder mehrere Magnetventile des Bereichsgruppengetriebes und mit 16 ein Hauptabschaltventil.

Die Erzeugung eines Bremsmomentes zur Verzögerung eines Radsatzes des Splitgruppengetriebes im Hinblick auf das ratschfreie Einlegen des Rückwärtsganges erfolgt dadurch, dass eines der beiden Magnetventile 12 des Splitgruppengetriebes bei geöffneter Kupplung immer abhängig von der Stellung des Vorwählschalters des Splitgruppengetriebes am Handschalthebel 1 angesteuert wird, wodurch die Luft zur Servounterstützungseinrichtung 4 und zum Zylinder 6 des Splitgruppengetriebes freigeschaltet wird, das heisst, dass die bereits geschaltete Position des Splitgruppengetriebes bestätigt wird. Der Kolben 17 des Splitgruppengetriebes kann jedoch auf Grund einer Wegbegrenzung, die im dargestellten Ausführungsbeispiel ein entriegelbarer Anschlag 18 auf der Schaltschiene 19 ist, keine Kraft über die Schaltgabel auf die Schiebemuffe 5 übertragen, sodass kein Bremsmoment erzeugt werden kann, das heißt, die Schaltgabel geht in der Schiebemuffe frei.

Damit nun das gewünschte Bremsmoment erzeugt werden kann, ist es notwendig, die Wegbegrenzung des Kolbens des Splitgruppengetriebes aufzuheben. Zu diesem Zweck wird ein zusätzliches mechanisch-pneumatisches oder elektromagnetisches 3/2-Wegeventil 14, 14' vorgesehen, welches bei Schalten in die Gasse für den Rückwärtsgang oder bei Einlegen des Rückwärtsganges angesteuert wird und das dadurch die Luft, welche über das Magnetventil 12 des Splitgruppengeetriebes geführt wird, zur Entriegelung der Wegbegrenzung des Kolbens 17 des Splitgruppengetriebes über die Entriegelungseinrichtung 3 freigibt. Nun kann die Schaltgabel gegen die Schiebemuffe 5 drücken um das erforderliche Bremsmoment zu erzeugen und damit entweder zeitgesteuert oder drehzahlgesteuert den entsprechenden Radsatz des Splitgruppengetriebes abbremsen und so ein ratschfreies Einlegen des Rückwärtsganges ermöglichen.

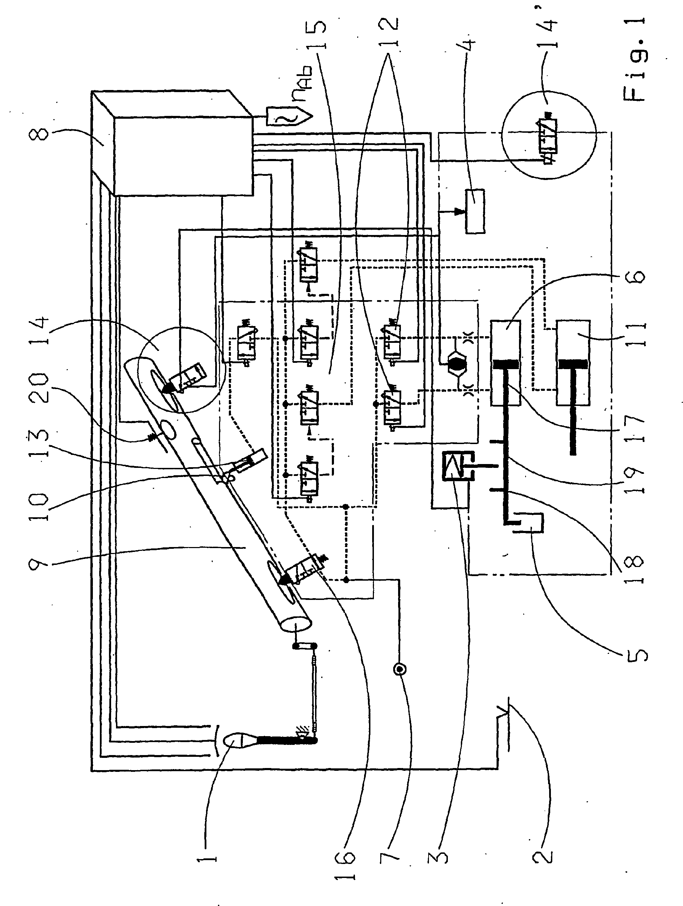

Das in der Fig. 1 dargestellte 3/2-Wegeventil 14 wird mechanisch von der Schaltwelle 9 betätigt, so dass ein Einlegen des Rückwärtsganges über die Schaltwelle 9 das Ventil 14 in die Schaltstellung betätigt, die Luft zu der Entriegelungseinrichtung 3 freigibt. Alternativ kann das ebenfalls in der Fig. 1 dargestellte 3/2-Wegeventil 14' elektrisch betätigt werden, wozu ein elektrischer Schalter 20 an der Schaltwelle 9 angeordnet ist, der von der Schaltwelle 9 beim Einlegen des Rückwärtsganges betätigt wird und dann ein Signal an die Steuereinrichtung 8 abgibt, die wiederum das Ventil 14' ansteuert.

Die Ventile 14 und 14' sind zwar beide in der Fig. 1 dargestellt, sie sind aber üblicherweise nur alternativ in einem Fahrzeug vorhanden.

In der Fig. 1 ist ein Handschalthebel 1 dargestellt, der mechanisch die Schaltwelle 9 betätigt. Darüber hinaus kann ein Getriebe mit den beschriebenen Merkmalen auch an einem automatisierten Getriebe mit von Aktuatoren betätigten Elementen angewendet werden. Bei Erkennen eines die Absicht des Einlegens des Rückwärtsganges andeutendenden Signals wird dann die elektronische Steuereinrichtung 8 das Ventil 14' ansteuern, wodurch die Entriegelungseinrichtung 3 betätigt wird. Ebenfalls kann eine beispielsweise elektro-magnetische Entriegelungseinrichtung dann direkt von der Steuereinrichtung 8 betätigt werden.

Die entriegelbare Wegbegrenzung in Form eines Anschlages 18 ist notwendig, damit nicht bei jedem anderen Schaltvorgang dieses Bremsmoment der Synchronisation entgegen wirkt.

Bei vorhandener Gangerkennung kann jedoch dieser Bremseffekt zumindest bei Hochschaltungen die Synchronisation des Grundgetriebes entlasten und so die Synchronzeit verkürzen.

Wird dem Zylinder 6 des Splitgruppengetriebes die Luftzufuhr über das Ventil 12 abgeschaltet, sodass die Bremse ausgeschaltet wird, ist auch die Servounterstützungseinrichtung 4 ohne Luftzufuhr, sodass ohne deren Mithilfe der Rückwärtsgang geschaltet werden kann.

Wie oben bereits erwähnt, werden keine zusätzlichen Bauteile für die Realisierung der Getriebebremse benötigt; es werden die bereits vorhandenen Magnetventile des Splitgruppengetriebes zur Ansteuerung mitverwendet.

### Bezugszeichen

- 1: Handschalthebel
- 2: Wegsensor Kupplung
- 3: Entriegelungseinrichtung
- 4: Servounterstützungseinrichtung
- 5: Schiebemuffe GV
- 6: Zylinder des Splitgruppengetriebes
- 7: Luftvorrat
- 8: elektronische Steuereinrichtung
- 9: Schaltwelle
- 10: Gassensperre
- 11: Zylinder des Bereichsgruppengetriebes
- 12: Magnetventile des Splitgruppengetriebes
- 13: Gassensperrzylinder
- 14, 14': 3/2-Wegeventil
- 15: Magnetventile des Bereichsgruppengetriebes
- 16: Hauptabschaltventil
- 17: Kolben des Zylinders des Splitgruppengetriebes
- 18: Anschlag
- 19: Schaltschiene
- 20: elektrischer Schalter

## Patentansprüche

1. Elektro-pneumatische Schalteinheit für ein Fahrzeuggetriebe, das ein Hauptgetriebeteil, ein über Ventile (12) pneumatisch schaltbares Splitgruppengetriebe sowie eine elektronische Steuereinrichtung (8) aufweist, **dadurch gekennzeichnet, dass** die Schalteinheit so ausgelegt ist, dass für ein ratschfreies Schalten des Rückwärtsganges ein Ventil (14, 14') angesteuert wird, wenn in den Rückwärtsgang geschaltet wird, und dass pneumatischer Druck zu einem Zylinder (6) des Splitgruppengetriebes durch ein für die Schaltung des Splitgruppengetriebes vorhandenes Magnetventil (12) freigeschaltet wird, so-dass ein Kolben (17) des Zylinders (6) eine Schiebemuffe (5) der Synchronisierung des Splitgruppengetriebes beaufschlagt, wodurch ein Bremsmoment zur Verzögerung eines Radsatzes des Splitgruppengetriebes erzeugbar ist.

2. Elektro-pneumatische Schalteinheit nach Anspruch 1, **dadurch gekennzeichnet, dass** der Kolben (17) des Splitgruppengetriebes mit einer Schaltschiene (19) zusammenwirkt, auf der eine durch das Ventil (14, 14') entriegelbare Wegbegrenzung (18) angeordnet ist.

3. Elektro-pneumatische Schalteinheit nach Anspruch 2, **dadurch gekennzeichnet, dass** die Wegbegrenzung (18) einen Anschlag umfaßt und dass die Entriegelung mittels des Ventils (14, 14') über eine Entriegelungseinrichtung (3) erfolgt, wobei das Ventil (14, 14') beim Schalten in den Rückwärtsgang die notwendige Luft zur Entriegelung der Entriegelungseinrichtung (3) des Kolbens (17) des Splitgruppengetriebes zur Verfügung stellt.

4. Elektro-pneumatische Schalteinheit nach einem der Ansprüche 1 bis 3, **dadurch gekennzeichnet, dass** beim Schalten in den Rückwärtsgang das Ventil (14) mechanisch betätigt wird und Luft zu der Entriegelungseinrichtung (3) freigibt.

5. Elektro-pneumatische Schalteinheit nach einem der Ansprüche 1 bis 3, **dadurch gekennzeichnet, dass** beim Schalten in den Rückwärtsgang ein elektrischer Schalter (20) betätigt wird, der über die elektronische Steuereinrichtung (8) das Ventil (14') betätigt, wodurch Luft zu der Entriegelungseinrichtung (3) freigegeben wird.

6. Elektro-pneumatische Schalteinheit nach einem der vorherigen Ansprüche, **dadurch gekennzeichnet, dass** das Bremsmoment für den zugehörigen Radsatz des Splitgruppengetriebes zeitgesteuert oder drehmomentgesteuert ist.

7. Elektro-pneumatische Schalteinheit nach einem der Ansprüche 1 bis 6, **dadurch gekennzeichnet, dass** bei einer vorhandenen Gangerkennung der erzeugte Bremseffekt bei Hochschaltungen für die Entlastung der Synchronisation des Grundgetriebes einsetzbar ist.

8. Verwendung einer elektro-pneumatischen Schalteinheit nach den Ansprüchen 1 bis 7 bei einem Fahrzeug mit automatisisertem Fahrzeuggetriebe.

9. Verwendung einer elektro-pneumatischen Schalteinheit nach den Ansprüchen 1 bis 7 bei einem Fahrzeug mit manuell vom Fahrzeugführer betätigtem Hauptgetriebeteil und manuell vom Fahrzeugführer vorwählbaren Schaltungen des Splitgruppengetriebes.

## Claims

1. The invention relates to an electropneumatic shifting component for a vehicle transmission featuring a main transmission element, a splitter unit pneumatically controlled via valves (12), as well as an electronic control unit (8), **characterized in that** the shifting component is designed in such a way that shifting into reverse actuates a valve (14, 14') for clash-free shifting into reverse and that pneumatic pressure is released by a solenoid valve (12) for a cylinder (6) of the splitter unit for control of the splitter unit, in such a way that a piston (17) of the cylinder (6) acts on a sliding sleeve (5) of the synchronizer of the splitter unit, as a result of which a brake torque can be generated for retardation of a gear set of the splitter unit.

2. An electropneumatic shifting component according to claim 1, **characterized in that** the piston (17) of the splitter unit interacts with a shift rail (19) on which a travel limiter (18), which can be unlocked by the valve (14, 14'), is arranged.

3. An electropneumatic shifting component according to claim 2, **characterized in that** the travel limiter (18) comprises a stop and that unlocking by the valve (14, 14') is effected via a release device (3), with the valve (14, 14') providing the air needed for unlocking the release device (3) of the piston (17) of the splitter unit when the reverse gear is engaged.

4. An electropneumatic shifting component according to one of the claims 1 through 3, **characterized in that** during shifting into reverse the valve (14) is mechanically actuated and releases air for the release device (3).

5. An electropneumatic shifting component according to one of the claims 1 through 3, **characterized in that** during shifting into reverse an electric switch (20) is actuated, which actuates the valve (14') via the electronic control unit (8), as a result of which air is released for the release device (3).

6. An electropneumatic shifting component according to one of the preceding claims, **characterized in that** the brake torque for the relevant gear set of the splitter unit is time- or torque-controlled.

7. An electropneumatic shifting component according to one of the claims 1 through 6, **characterized in that** with recognition of an engaged gear the brake effect generated can be utilized during upshifts to take load off the synchronizer of the base transmission.

8. Use of an electropneumatic shifting component according to the claims 1 through 7 in a vehicle with automated transmission.

9. Use of an electropneumatic shifting component according to the claims 1 through 7 in a vehicle with a base transmission component manually actuated by the driver and a splitter unit providing shifts which can be preselected manually by the driver.

## Revendications

1. Unité de commande électropneumatique pour une boîte de vitesses d'un véhicule, comportant une boîte de base, un doubleur de gamme couplable par voie pneumatique à l'aide de soupapes (12) et un dispositif de commande électronique (8), **caractérisée en ce que** l'unité de commande est conçue de manière à ce que pour l'enclenchement sans à-coups de la marche arrière est pilotée une soupape (14, 14') au moment de l'engagement de la marche arrière, et **en ce que** la pression pneumatique vers un cylindre (6) du doubleur de gamme est libérée par une électrovanne intégrée pour la commutation du doubleur de gamme (12), de manière à ce qu'un piston (17) du cylindre (6) pressurise un manchon coulissant (5) de la synchronisation du doubleur de gamme, permettant de produire un couple de freinage pour la décélération d'un train d'engrenages du doubleur de gamme.

2. Unité de commande électropneumatique selon la revendication 1, **caractérisée en ce que** le piston (17) du doubleur de gamme coopère avec une tige de commande (19), sur laquelle est disposé un dispositif de fin de course déverrouillable (18) par la soupape (14, 14').

3. Unité de commande électropneumatique selon la revendication 2, **caractérisée en ce que** le dispositif de fin de course (18) comprend une butée, et **en ce que** le déverrouillage s'effectue par la soupape (14, 14') et à l'aide d'un dispositif de déverrouillage (3), sachant que lors de l'enclenchement de la marche arrière la soupape (14, 14') fournit l'air nécessaire pour le déverrouillage du dispositif de déverrouillage (3) du piston (17) du doubleur de gamme.

4. Unité de commande électropneumatique selon une des revendications 1 à 3, **caractérisée en ce que** lors de l'enclenchement de la marche arrière la soupape (14) est actionnée mécaniquement et libère de l'air vers le dispositif de déverrouillage (3).

5. Unité de commande électropneumatique selon une des revendications 1 à 3, **caractérisée en ce que** lors de l'enclenchement de la marche arrière est actionné un contacteur électrique (20), qui actionne par l'intermédiaire du dispositif de commande électronique (8) la soupape (14'), provoquant la libération d'air vers le dispositif de déverrouillage (3).

6. Unité de commande électropneumatique selon une des revendications précédentes, **caractérisée en ce que** le couple de freinage du train d'engrenages associé du doubleur de gamme est piloté par temporisation ou en fonction du couple.

7. Unité de commande électropneumatique selon une des revendications 1 à 6,
**caractérisée en ce que**, en cas de présence d'un dispositif de reconnaissance es rapports, l'effet de freinage produit lors des passages montants peut être utilisé our la réduction de la sollicitation des synchroniseurs de la boîte de base.

8. Utilisation d'une unité de commande électropneumatique selon les revendications 1 à 7 sur un véhicule doté d'une boîte de vitesses automatisée pour véhicules.

9. Utilisation d'une unité de commande électropneumatique selon les revendications 1 à 7 sur un véhicule doté d'une boîte de base actionnée manuellement par le conducteur et d'un système de présélection manuelle des changements de vitesses du doubleur de gamme.
